(19) **Europäisches Patentamt**
**European Patent Office**
**Office européen des brevets**

(11) Numéro de publication : **0 057 431**
**B1**

(12) **FASCICULE DE BREVET EUROPÉEN**

(45) Date de publication du fascicule du brevet :
26.09.84

(21) Numéro de dépôt : **82100594.9**

(22) Date de dépôt : **28.01.82**

(51) Int. Cl.³ : **F 16 L 3/18, G 21 D 1/02**

(54) **Dispositif de support de tuyauterie.**

(30) Priorité : **03.02.81 FR 8101991**

(43) Date de publication de la demande :
**11.08.82 Bulletin 82/32**

(45) Mention de la délivrance du brevet :
**26.09.84 Bulletin 84/39**

(84) Etats contractants désignés :
**BE DE FR GB IT NL**

(56) Documents cités :
**CH-A- 403 660**
**FR-A- 1 330 642**
**FR-A- 2 443 011**
**US-A- 2 630 835**

(73) Titulaire : **STEIN INDUSTRIE Société anonyme dite:**
**19-21, Avenue Morane Saulnier B.P. 74**
**F-78141 Velizy-Villacoublay (FR)**

(72) Inventeur : **Roger, Gérard**
**L'Hermitage**
**F-78790 Hargeville (FR)**
Inventeur : **Marsault, Jean-Jacques**
**23, rue des Corps Saints**
**F-78730 Saint-Arnoult-en-Yvelines (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention concerne un dispositif de support de tuyauteries d'épaisseur faible par rapport à leur diamètre et soumises à des variations de températures importantes, comportant :

a) un collier entourant la tuyauterie et espacé de celle-ci, et percé de trous en au moins deux points symétriquement disposés sur son pourtour,

b) des fers radiaux soudés sur le collier entre les trous de celui-ci,

c) des taquets circulaires soudés sur la tuyauterie au centre des trous du collier,

d) une connexion entre la tuyauterie et le collier.

Le document FR-A-2 443 011 du 30 novembre 1978 décrit un dispositif de support ou de fixation de tuyauteries d'épaisseur faible par rapport à leur diamètre et soumises à des variations de température importantes, devant éventuellement être protégées contre les secousses sismiques, comprenant un collier entourant la tuyauterie et espacé de celle-ci, et percé de trous en au moins deux points symétriquement disposés sur son pourtour, des taquets soudés sur la tuyauterie au centre des trous du collier, des pièces de liaison engagées dans chacun des taquets, et des lames flexibles soudées d'un côté sur les pièces de liaison et d'un autre côté sur des pièces solidaires du collier.

Un tel dispositif convient bien pour la fixation de tuyauteries en vue de l'amortissement de secousses ou vibrations. Il est moins approprié au support de tuyauteries soumises à des variations de température très importantes. En effet, les pièces de ce dispositif, et notamment les lames flexibles, sont constamment soumises à des contraintes de traction ou de compression, du fait du poids de la tuyauterie. Lorsqu'il se produit des variations de température importantes, les contraintes transitoires de dilatation ou de contraction peuvent s'ajouter aux contraintes permanentes et dépasser la limite élastique des lames. Si ces contraintes thermiques transitoires se répètent assez fréquemment, il risque de se produire des déformations plastiques successives des lames, entraînant leur mise hors d'usage.

La présente invention a pour but de remédier à cette difficulté, et de procurer un dispositif de support susceptible de subir des contraintes thermiques répétées de dilatation et de contraction en restant dans le domaine des déformations élastiques.

Le dispositif de support selon l'invention est caractérisé en ce qu'il comporte, au lieu des pièces de liaison et des lames flexibles décrites dans ledit document, des demi-lames allongées de plan de symétrie transversal, fixées aux taquets circulaires, soudées par une de leurs extrémités à l'un des fers radiaux, et libres par leur autre extrémité.

Il répond en outre de préférence à au moins l'une des caractéristiques suivantes :

— les demi-lames sont d'une épaisseur plus faible dans leur zone comprise entre la région de leur soudure aux fers radiaux et celles où elles sont fixées aux taquets circulaires ;

— les fers radiaux sont des fers en U renversés, soudés par les extrémités de leurs flancs sur le collier ;

— les flancs des fers en U sont inclinés par rapport aux normales au collier à leurs lignes de soudure, de façon que l'angle de ces flancs avec le plan tangent au collier le long de la ligne de soudure à l'extérieur du fer en U soit obtus ;

— il comporte en outre des barrettes de maintien des demi-lames, d'axes perpendiculaires au plan transversal de symétrie des demi-lames, soudées sur les taquets circulaires aux points où elles viennent à leur contact.

Il est décrit ci-après, à titre d'exemple et en référence aux figures du dessin annexé, un dispositif selon l'invention prévu pour une tuyauterie horizontale de transport de sodium liquide dans une centrale à réacteur nucléaire à neutrons rapides.

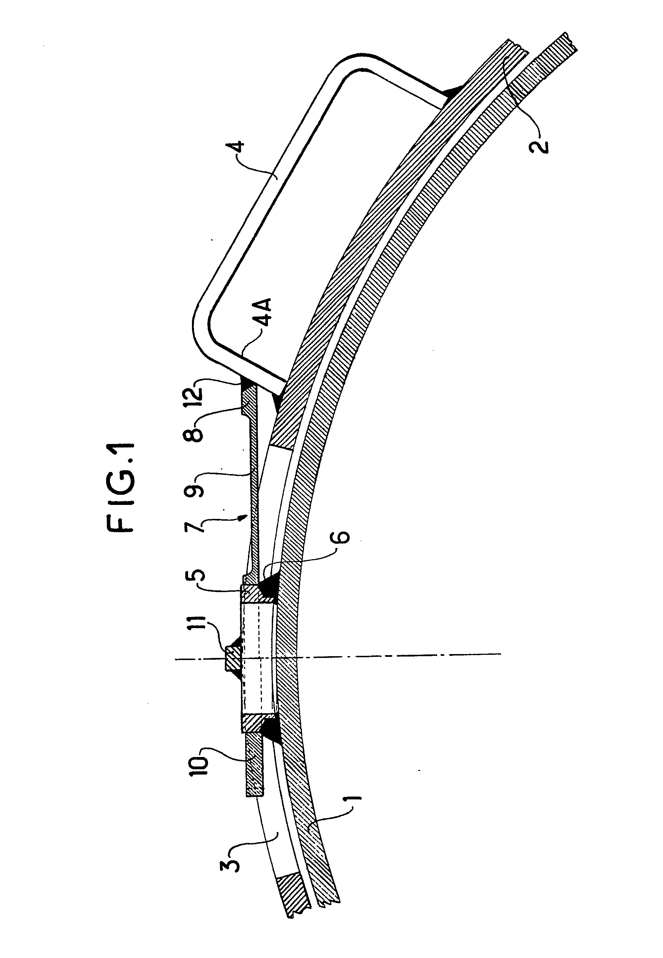

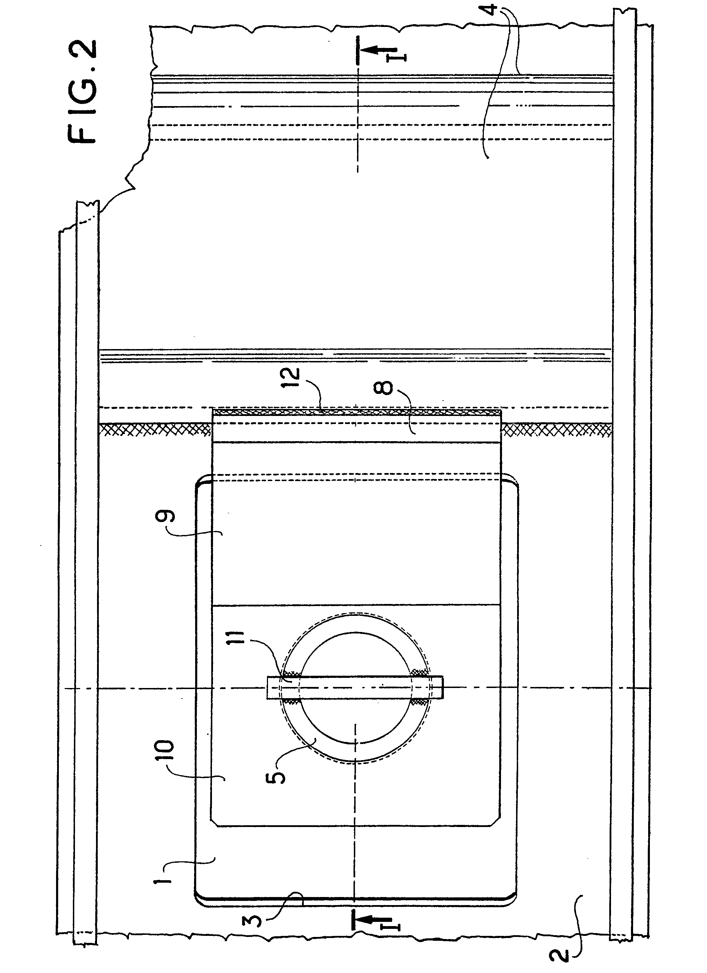

La figure 1 représente une coupe transversale selon l'axe I-I de la figure 2 d'une partie du dispositif de support.

La figure 2 représente la même partie du dispositif de support en plan vue de dessus.

La tuyauterie 1 est entourée d'un collier de support 2. Ce dernier est percé de quatre trous répartis à 90° sur son pourtour, dont un seul 3 est vu sur la figure.

Des fers en U renversé 4 sont soudés sur le collier à égale distance entre les trous 3. Des taquets circulaires 5, à base inférieure amincie, sont soudés sur la tuyauterie au centre des trous de collier par des cordons de soudure 6. Ces taquets sont reliés au collier par l'intermédiaire de lames flexibles 7 qui les enserrent, reliées par un cordon de soudure 12 à l'une de leurs extrémités relativement épaisse 8 au flanc 4A du fer 4 en U renversé. Ces lames comportent une partie centrale amincie 9 et une autre extrémité de plus grande épaisseur 10, entourant la partie supérieure des taquets 5.

L'extrémité 8 de la lame est meulée pour faciliter sa soudure sur le flanc 4A du fer en U. Ce flanc est par ailleurs incliné par rapport au plan diamétral qui passerait par l'axe de la tuyauterie, de façon que l'angle formé par le plan tangent au collier et le flanc du fer en U, à l'extérieur de ce dernier, soit obtus.

La longueur des lames flexibles n'est pas constante, mais réglée pour chaque taquet en fonction de la position exacte de celui-ci après son soudage sur la tuyauterie, et de celle du fer en U après son soudage sur le collier.

On voit que de telles lames, tout en reliant mécaniquement la tuyauterie au collier, permettent des dilatations radiales différentielles de la tuyauterie et du collier sans apparition de contraintes notables. Elles sont par ailleurs suffisamment longues pour admettre un fléchissement leur permettant de suivre les dilatations radiales de la tuyauterie.

Pour éviter qu'une lame ne puisse éventuellement s'échapper du taquet correspondant, des barrettes 11, perpendiculaires au plan de symétrie des lames, sont disposées au-dessus de celles-ci et soudées sur les taquets dans leurs zones de contact diamétralement opposées avec ceux-ci, par exemple par points.

La préparation du dispositif de support s'effectue comme suit. On soude au centre des trous du collier les taquets circulaires sur la tuyauterie, puis on soude les fers en U sur le collier entre les trous. On ajuste alors sur chaque taquet une lame de façon que sa surface externe soit légèrement au-dessous du plan du haut du taquet, et que son extrémité vienne au contact du flanc du fer en U, à mi-hauteur de celui-ci. On meule obliquement le bord de la lame à souder au fer en U de façon à faciliter leur soudage, puis effectue la soudure. On pose alors les barrettes sur les taquets perpendiculairement aux lames, puis les soude par points dans leurs zones de contact avec eux.

Bien que le dispositif qui vient d'être décrit en référence aux figures paraisse la forme de réalisation préférable de l'invention, on comprendra que diverses modifications peuvent lui être apportées sans sortir du cadre de l'invention. En particulier, les fers sur lesquels sont soudés les lames pourraient présenter une forme différente.

L'invention s'applique plus particulièrement au support de tuyauteries de transport de sodium liquide dans une centrale à réacteur nucléaire surrégénérateur, mais elle convient pour le support de toutes autres tuyauteries soumises en service à des variations de température importantes, du fait des fluides appelés à y circuler.

## Revendications

1. Dispositif de support de tuyauteries d'épaisseur faible par rapport à leur diamètre et soumises à des variations de températures importantes, comportant :

a) un collier (2) entourant la tuyauterie (1) et espacé de celle-ci, et percé de trous (3) en au moins deux points symétriquement disposés sur son pourtour,

b) des fers radiaux (4) soudés sur le collier entre les trous de celui-ci,

c) des taquets circulaires (5) soudés sur la tuyauterie concentriques par rapport aux trous du collier,

d) une connexion entre la tuyauterie (1) et le collier (2) caractérisée en ce que cette connexion est formée par des demi-lames allongées (7) de plan de symétrie transversal, fixées aux taquets circulaires, soudées par une de leurs extrémités (8) à l'un des fers radiaux, et libres par leur autre extrémité (10).

2. Dispositif selon la revendication 1, caractérisé en ce que les demi-lames sont d'une épaisseur plus faible dans leur zone (9) comprise entre la région (8) de leur soudure aux fers radiaux et celle (10) où elles sont fixées aux taquets circulaires.

3. Dispositif selon les revendications 1 ou 2, caractérisé en ce que les fers radiaux sont des fers en U renversés, soudés (12) par les extrémités de leurs flancs sur le collier.

4. Dispositif selon la revendication 3, caractérisé en ce que les flancs (4A) des fers en U (4) sont inclinés par rapport aux normales au collier à leurs lignes de soudure, de façon que l'angle de ces flancs avec le plan tangent au collier le long de la ligne de soudure à l'extérieur du fer en U soit obtus.

5. Dispositif selon l'une des revendications 1 à 4, caractérisé en ce qu'il comporte en outre des barrettes (11) de maintien des demi-lames, d'axes perpendiculaires au plan transversal de symétrie des demi-lames, soudées sur les taquets circulaires.

## Claims

1. A support device for pipes which are thin-walled relative to their diameter and which are subjected to important temperature variations, comprising :

a) a collar (2) surrounding the pipe (1) and spaced apart thereform and having holes (3) disposed at at least two points symmetrically disposed around its periphery,

b) radial iron members (4) welded to the collar in between the holes thereof,

c) circular anchor rings (5) welded to the pipe concentrically with respect to the holes of the collar,

d) a connection between the pipe (4) and the collar (2),

characterized in that the connection is constituted of elongated tongues (7) with transversal planes of symmetry, these tongues being fixed to the circular anchor rings and being welded by one of their ends (8) to one of the radial iron members, whereas the other end (10) of the tongues is free.

2. A device according to claim 1, characterized in that the half-tongues are thinner in their intermediate zone (9) extending between the region (8) where they are welded to the radial iron members and that region (10) where they are fixed to the circular anchor rings.

3. A device according to claims 1 or 2, characterized in that the section of the radial iron members in shaped like an inverted U, these members being welded by the ends (12) of their flanks to the collar.

4. A device according to claim 3, characterized in that the flanks (4A) of the U-shaped iron members (4) are inclined relative to the line which is perpendicular to the collar at their weld lines, so that there is an obtuse outside angle between said flanks and the plane which is tangential to the collar along the weld line.

5. A device according to one of the claims 1 to 4, characterized in that it includes stop bars (11) to hold the half-tongues, the axes of these bars being perpendicular to the transversal plane of symmetry of the half-tongues and being welded to the circular anchor rings.

**Ansprüche**

1. Vorrichtung zum Aufhängen von Rohrleitungen, deren Dicke gering ist im Vergleich mit ihrem Durchmesser und die großen Temperaturschwankungen unterworfen sind,

a) mit einem Kragen (2), der die rohrleitung (1) umgibt und zu dieser einen Abstand hat sowie Löcher (3) an mindestens zwei symmetrisch auf seinem Umfang verteilten Punkten aufweist,

b) mit radialen Eisen (4), die zwischen den Löchern auf den Kragen geschweißt sind,

c) mit kreisförmigen Pflöcken (5), die auf die Rohrleitung geschweißt und in bezug auf die Löcher des Kragens konzentrisch liegen,

d) mit einer Verbindung zwischen der Rohrleitung (1) und dem Kragen (2),

dadurch gekennzeichnet, daß diese Verbindung von länglichen Halbplättchen (7) mit einer transversal verlaufenden Symmetrieebene gebildet wird, die an den kreisförmigen Pflöcken befestigt sind, mit einem ihrer Enden (8) an eines der radialen Eisen angeschweißt und an ihrem anderen Ende (10) frei sind.

2. Vorrichtung nach Anspruch 1, dadurch gekennzeichnet, daß die Halbplättchen in ihrer Zone zwischen dem Bereich (8) ihre Verschweissung mit den radialen Eisen und dem Bereich (10), in dem sie an den kreisförmigen Pflöcken befestigt sind, dünner ausgebildet sind.

3. Vorrichtung nach den Ansprüchen 1 oder 2, dadurch gekennzeichnet, daß die radialen Eisen die Form eines umgedrehten U haben und mit den Enden ihrer Flanken (12) an den Kragen angeschweißt sind.

4. Vorrichtung nach Anspruch 3, dadurch gekennzeichnet, daß die Flanken (4A) der U-förmigen Eisen (4) in bezug zum Lot auf dem Kragen an ihren Schweißnähten geneigt sind, so daß der Winkel dieser Flanken mit der Tangente am Kragen entlang der Schweißnaht auf der Außenseite des U-förmigen Eisens ein stumpfer Winkel ist.

5. Vorrichtung nach einem der Ansprüche 1 bis 4, dadurch gekennzeichnet, daß sie außerdem Haltestäbe (11) für die Halbplättchen aufweist, deren Achsen senkrecht zur transversalen symmetrieebene der Halbplättchen verlaufen und die auf die kreisförmigen Pflöcke geschweißt sind.

# FIG.1

0 057 431

FIG.2